# FASCICULE DE BREVET EUROPEEN

(11) **EP 1 135 623 B1**
(45) Date de publication et mention de la délivrance du brevet: **14.04.2004**
(21) Numéro de dépôt: 99936652.9
(22) Date de dépôt: 30.07.1999
(51) Int. Cl.: F16D 11/00

(54) **CONDUITE FLEXIBLE A ENROULEMENT DE FIL DE FORME EN I**
SCHLAUCH MIT I-FOERMIGEM SPIRALDRAHT
FLEXIBLE PIPE WITH I-SHAPED WIRE WINDING

(30) Priorité: 10.08.1998 FR 9810254; 02.12.1998 FR 9815221
(43) Date de publication de la demande: 26.09.2001
(73) Titulaire: TECHNIP FRANCE, 92400 Courbevoie (FR)
(72) Inventeur: DUPOIRON, François, F-76360 Barentin (FR); ESPINASSE, Philippe, François, F-76420 Bihorel (FR); JUNG, Patrice, F-76940 La Mailleraye sur Seine (FR)
(74) Mandataire: Bertrand, Didier
(86) Numéro de dépôt international: PCT/FR1999/001892
(87) Numéro de publication internationale: WO 2000/009899

(56) Documents cités:
- EP-A- 0 307 613
- FR-A- 2 210 267
- FR-A- 2 229 913

## Description

La présente invention concerne une conduite flexible pour véhiculer sur de grandes distances un fluide sous pression et le cas échéant sous haute température, tel qu'un gaz, du pétrole, de l'eau ou d'autres fluides. L'invention vise tout particulièrement une conduite destinée à une exploitation pétrolière en mer. Elle vise notamment : d'une part les conduites de fond, dites "flow-lines", c'est-à-dire des conduites flexibles déroulées à partir d'un bateau pour être posées généralement sur le fond de la mer et connectées aux installations sous-marines, de telles conduites travaillant principalement en statique ; d'autre part, les colonnes montantes, dites "risers", c'est-à-dire des conduites flexibles déroulées à partir d'une installation de surface telle qu'une plate-forme et qui sont connectées aux installations sous-marines et dont la majeure partie ne repose pas sous le fond marin, de telles conduites travaillant essentiellement en dynamique.

Les conduites flexibles utilisées en mer doivent pouvoir résister à des pressions internes et/ ou à des pressions externes fortes et supporter également des flexions longitudinales ou des torsions sans risque de rupture.

Elles présentent des configurations variées en fonction de leur utilisation précise mais répondent en général aux critères constructifs définis notamment dans les normes API 17 B et API 17 J établies par l'American Petroleum Institute sous l'intitulé "Recommended Practice for Flexible Pipe". On pourra aussi se reporter aux documents FR 2 654 795 A, WO 98 / 25 063 A, FR 2 727 738 A, FR 2 744 511 A.

Une conduite flexible comprend généralement de l'intérieur vers l'extérieur :
- une gaine d'étanchéité interne réalisée en matière plastique, généralement polymère, résistant plus ou moins à l'action chimique du fluide à transporter ;
- une voûte de pression résistant principalement à la pression développée par le fluide dans la gaine d'étanchéité et constituée par l'enroulement en hélice à pas court (c'est-à-dire avec un angle d'enroulement voisin de 90°) autour de la gaine interne, d'un ou plusieurs fils métalliques de forme agrafés (auto-agrafables ou non) ;
- au moins une nappe (et généralement au moins deux nappes croisées) d'armures de traction dont l'angle d'armage mesuré sur l'axe longitudinal de la conduite est inférieur à 55° ; et
- une gaine de protection et d'étanchéité externe en polymère.

Une telle structure est celle d'une conduite à passage lisse, dite "smooth bore". Dans une conduite à passage non-lisse, dite "rough bore", on prévoit en outre à l'intérieur de la gaine d'étanchéité interne une carcasse constituée d'un feuillard agrafé qui sert à empêcher l'écrasement (en anglais "collapse") de la conduite sous pression externe. La voûte de pression participe néanmoins aussi à la résistance à l'écrasement.

On cherche à alléger le poids des flexibles, en particulier pour les applications aux grandes profondeurs, où, pour résister à l'écrasement, on a besoin d'augmenter considérablement l'inertie du fil de forme constituant la voûte de pression. Le poids de la conduite flexible joue aussi un rôle important lors de sa pose ; en effet, son poids doit être limité pour permettre la pose par les moyens existants (par exemple 600 tonnes pour un système classique).

La voûte de pression est constituée d'un fil de forme, usuellement de type en Z ou T, ou leurs dérivés (teta et zeta), enroulé à faible pas. Le fil de forme est généralement tel que le rapport entre sa hauteur et sa largeur est inférieur à 1, afin d'éviter le tuilage lors de l'enroulement de la voûte. De plus, il est connu de dimensionner la voûte de pression de façon qu'elle contribue à retarder le passage à l'ovalisation de la carcasse sous l'augmentation de la pression interne (ce passage conduisant à la ruine de la carcasse), mais favorise la prolongation du mode de déformation préféré en cardioïde : le retard de l'ovalisation est d'autant plus important que l'inertie Ixx du fil de forme constituant la voûte est élevée.

Pour les applications aux grandes profondeurs, on souhaite donc augmenter l'inertie du fil de forme usuellement employé, pour résister à la pression d'écrasement ; on pourrait par exemple vouloir utiliser un fil en teta de 16 mm de hauteur. Il en résulterait cependant des inconvénients, tels que l'augmentation du poids de la conduite qui peut excéder la limite des système de pose, voire excéder les limites de résistance de la conduite elle-même à soutenir son propre poids pendant la pose ; et une mise en oeuvre plus complexe de ce type de fil de forme ; tous ces inconvénients grèvent le prix de fabrication d'une telle conduite.

L'industrie pétrolière recherche donc un fil de forme agrafable ayant une inertie Ixx importante pour un poids faible.

On a déjà proposé, par exemple dans le document US 4 549 581 A, d'utiliser des fils de forme en U agrafables, mais l'amélioration apportée au rapport inertie/poids n'a pas été significative. Par ailleurs, il apparaît difficilement envisageable d'alléger les profils connus en S, Z ou T en prévoyant des creux, pour des raisons de fabrication.

Le but de l'invention est donc de proposer un nouveau type de profil agrafable permettant d'augmenter très favorablement le rapport inertie/poids.

L'invention atteint son but en proposant une conduite tubulaire flexible comprenant au moins, de l'intérieur vers l'extérieur, une gaine d'étanchéité interne, une voûte de pression cylindrique constituée par l'enroulement en hélice à pas court d'un fil métallique de forme agrafé, au moins une nappe d'armures de traction enroulées à pas long et une gaine de protection et d'étanchéité externe en polymère; caractérisée en ce que le fil de forme constituant la voûte est à section en I.

Des profils en I (ou en H) ont déjà été proposés dans le cadre spécifique du flexoforage, par exemple par les documents FR 2 210 267 A ou FR 2 229 913 A. Cependant, ces profils sont utilisés pour réaliser les armures de traction, c'est-à-dire sous forme d'enroulements à pas long de fils non agrafés, tandis que la voûte de pression est toujours réalisée avec des fils de forme agrafés en S ou Z. D'autre part, dans cette application au flexoforage, les fils proposés présentent un rapport hauteur/largeur supérieur à 1 et un rapport d'inerties Ixx/Iyy de préférence compris entre 1,5 et 2. Un tel fil ne permettrait ni le cintrage nécessaire, ni la stabilité lors d'un enroulement à pas court (phénomène de tuilage).

On connaît aussi par le document GB 1 081 339 A un tuyau formé d'un enroulement à pas court d'un feuillard à caisson à section en I, dont les ailes sont suffisamment souples pour pouvoir par déformation s'imbriquer les unes avec les autres. Le tuyau considéré n'a rien à voir avec les conduites de l'invention puisqu'il ne présente ni voûte de pression ni armures de traction et n'est pas destiné aux mêmes applications. L'enroulement ne présente en lui-même aucune difficulté du fait qu'il s'agit d'un feuillard qui, même caissonné, reste très souple. Du reste le rapport en la hauteur et la largeur du I formé par le feuillard est très faible (typiquement moins de 1/3), ce qui permet l'enroulement facile.

La présente invention en diffère en ce qu'il s'agit d'un véritable fil de forme, c'est-à-dire d'un fil de relativement forte section (diamètre moyen généralement supérieur à 10mm) non assimilable à un simple feuillard. De plus, selon l'invention, le rapport entre la hauteur et la largeur du I est de préférence compris entre 0,5 et 1 et même entre 0,7 et 0,8.

Avantageusement, le fil forme un I à ailes épaisses, dans lesquelles sont formés des évidements destinés à loger au moins partiellement des agrafes, par exemples les ailes d'agrafes en U.

Ces évidements peuvent être formés du côté intérieur des ailes, mais sont de préférence formés du côté extérieur des ailes, pour faciliter l'agrafage. Ils peuvent être formés vers les extrémités des ailes, voire formés au centre des ailes.

L'invention sera bien comprise à l'aide de la description qui suit, en référence aux dessins schématiques annexés représentant à titre d'exemple des formes de réalisation de la conduite flexible selon l'invention. D'autres avantages et caractéristiques seront mis en évidence à la lecture de la description.

La figure 1 est une vue en perspective schématique montrant les couches successives d'une conduite (ici de type "smooth bore") à laquelle s'applique l'invention.

La figure 2 est une vue partielle en coupe longitudinale d'un premier mode de réalisation d'une conduite flexible selon l'invention, la voûte métallique étant formée d'un fil métallique en I enroulé en hélice agrafé par le haut.

La figure 3 est une vue partielle en coupe longitudinale d'un second mode de réalisation de voûte métallique selon l'invention.

Les figures 4 à 16 montrent en section partielle schématique cinq variantes de profil en I pour fil de forme conforme à l'invention combinées le cas échéant à divers modes d'agrafage.

La figure 17 est un graphique illustrant pour différents types de fils de forme la relation entre l'inertie*module et le poids par mètre de conduite.

Il est à noter que dans certaines figures les espaces entre les éléments constitutifs ont été parfois volontairement exagérés pour une meilleure clarté des dessins.

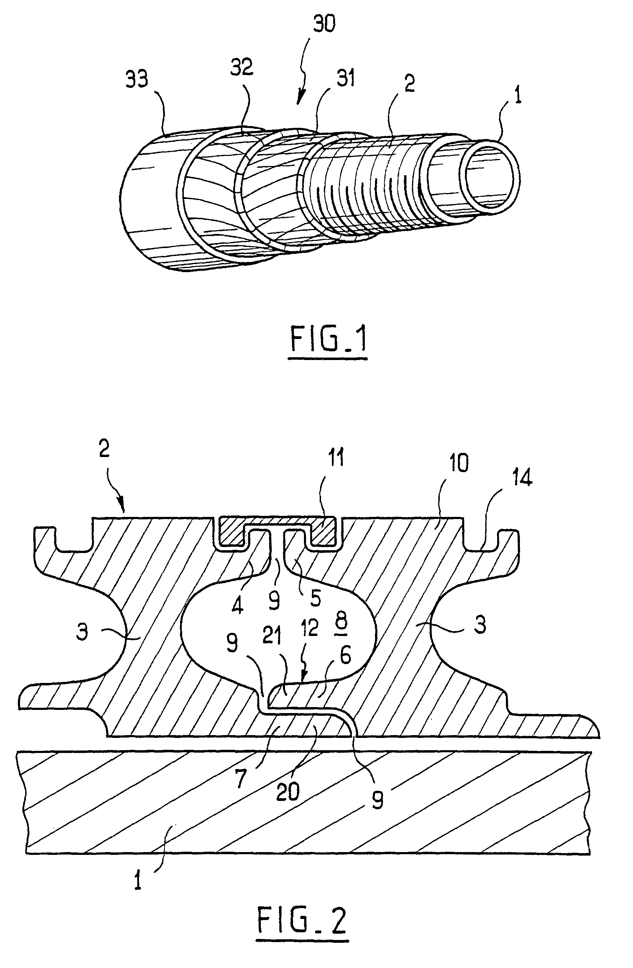

Comme le montre la figure 1, et de manière générale, une conduite de type "smooth bore" comprend de l'intérieur vers l'extérieur une gaine d'étanchéité interne polymérique 1, une voûte métallique 2 constituée par l'enroulement en hélice à pas court d'au moins un fil métallique de forme, une armure 30 résistant à la traction axiale dans le sens longitudinal de la conduite et habituellement constituée d'une ou plusieurs paires de nappes croisées 31, 32 d'enroulement à pas long en sens contraire, et d'une gaine d'étanchéité externe polymérique 33. D'autres couches non représentées peuvent être prévues, selon le type et la destination de la conduite, comme par exemple une carcasse interne sous la gaine interne d'étanchéité 1 (conduite dite "rough bore" qui sont le type préféré d'application de l'invention), une couche de frette constituée par un enroulement à pas court de fil rectangulaire interposée entre la voûte de pression 2 et la première nappe d'armure 31, et des gaines intermédiaires disposées entre diverses nappes d'armures.

La figure 2 montre en section longitudinale un exemple de voûte de pression 2 conforme à l'invention formée d'un fil de forme 10 de grosse section et donc de grande inertie, mais allégée car constitué d'un fil profilé à section en I debout (ou H couché) qui présente une âme 3 et des ailes 4, 5, 6 et 7, l'âme 3 étant enroulée sensiblement radialement sur et autour de la gaine interne 1 en une hélice à pas court, les ailes externes 4, 5 et les ailes internes 6, 7 des spires consécutives étant en regard et formant conjointement un volume sensiblement confiné 8 traversant hélicoïdalement la voûte 2.

La forme des ailes peut être très diverse, comme on va le voir par la suite, à partir du moment où les ailes côté interne 6, 7 ou côté externe 4, 5 permettent l'agrafage du fil. Celui-ci est réalisé soit par auto-agrafage grâce à un profil spécial donné au fil de forme, soit par un fil d'agrafage rapporté qu'on préfère généralement disposer sur la face extérieure de la voûte (agrafage dit " par le haut ") à la fois pour des raisons de facilité de fabrication et de meilleure résistance de la conduite, notamment pour son utilisation en dynamique (colonne montante).

Dans le mode de réalisation représenté sur la figure 2, le fil métallique 10 en I de la voûte de pression 2 de la conduite flexible est agrafé par une agrafe 11 au niveau de la face externe de la voûte ; l'agrafe 11 est constituée d'un fil en U plat enroulé hélicoïdalement dans des évidements 14 de la face externe de la voûte 2, c'est-à-dire au niveau des ailes 4 et 5 extérieures du fil métallique 10, et elle relie les spires consécutives du fil métallique 10 enroulé en hélice au niveau de ces ailes extérieures 4 et 5. L'agrafe 11 est avantageusement disposée en léger retrait par rapport au volume enveloppe de la face externe de manière à éviter que les couches d'armure ne portent sur l'agrafe 11, entraînant des risques de fatigue induite en utilisation dynamique.

Pour donner de la flexibilité à la conduite, l'enroulement en hélice du fil métallique 10 est fait en laissant des déjoints hélicoïdaux internes et externes au niveau des faces respectivement interne et externe de la voûte de pression, ces déjoints s'ouvrant sur le volume interne 8. Afin de bloquer la possibilité de fluage de la gaine 1 entre les ailes 6 et 7 de deux spires consécutives, on prévoit avantageusement un dispositif anti-fluage constitué par un élément-cache 12 réalisé sur la figure 2 par le recouvrement de parties 20, 21 des ailes dissymétriques 6, 7 en regard de la gaine interne 1. Ces parties 20, 21 se chevauchent longitudinalement de sorte qu'elles admettent la formation du déjoint longitudinal 9, mais en revanche ne laissent pratiquement pas de passage dans le sens de l'épaisseur des ailes, de manière à barrer l'accès entre la gaine 1 et le volume confiné 8.

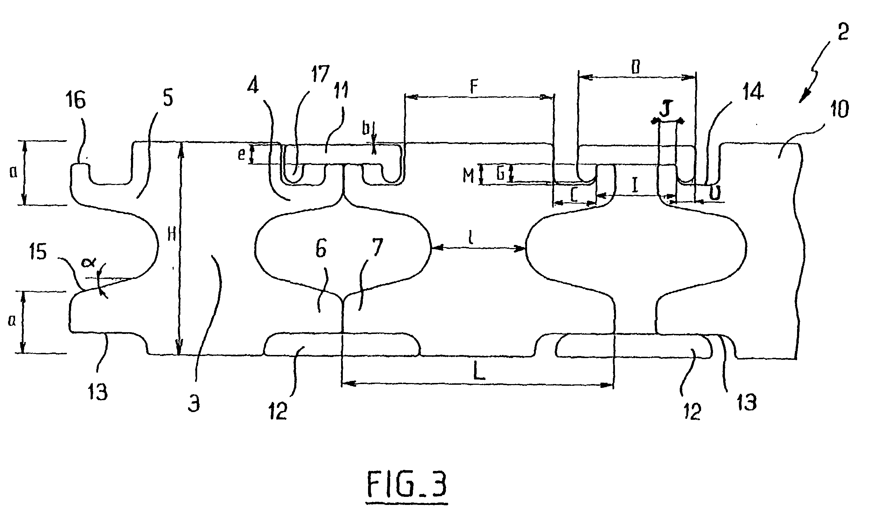

La figure 3 représente plus en détail un mode de réalisation préféré de fil de forme en I agrafé par le haut au moyen d'une agrafe 11 semblable à celle du mode de réalisation de la figure 2, et destiné à des applications dynamiques. L'élément-cache anti-fluage 12 est ici constitué d'un fil plat, par exemple en métal téflonné, enroulé hélicoïdalement dans la face intérieure de la voûte 2, au niveau des ailes intérieures 6 et 7, symétriques, du fil métallique 3, grâce à des parties évidées 13 en regard ménagées sur la longueur des ailes 6 et 7 des spires consécutives du fil métallique 3 les plus internes à la conduite. Ces parties évidées 13 sont sensiblement en correspondance de forme avec ledit élément-cache 12 de sorte que ce dernier 12 puisse aisément s'y loger au moins partiellement.

Le fil 10 est en forme de I de hauteur H et de largeur L, son âme 3 ayant une épaisseur ℓ.Les ailes sont de hauteur a et raccordées à l'âme par une surface 15 sensiblement en dièdre à sommet arrondi, le dièdre faisant un angle alpha avec un plan parallèle à la base des ailes, cet angle étant lié aux conditions de laminage et aux contraintes pour le I (position du centre de gravité, répartition des contraintes, poids). Ces surfaces 15 se raccordent à l'âme par un arrondi dont le rayon de courbure est défini par les possibilités de laminage. Il a été découvert selon l'invention que, pour obtenir le gain souhaité de poids pour une même inertie, il était préférable d'avoir :
(1) Ixx/Iyy < 1 (xx et yy désignant des axes respectivement horiontal et vertical par rapport au I)
(2) 0,5 < H/L < 1 et de préférence (2') 0,7 < H/L < 0,8
(3) 0,2 < ℓ/L < 0,6 et de préférence (3') 0,3 < ℓ/L < 0,5
(4) 0 < alpha < 45° et de préférence (4') 10° < alpha < 30°
   Quant à l'agrafage, il est réalisé de manière à permettre aux fils agrafés adjacents d'être écartés par un jeu compris entre un jeu minimum nul (voir les deux fils de gauche sur la figure 3) et un jeu maximum (voir les deux fils de droite sur la figure 3), jeux auxquels correspondent un pas minimum et un pas maximum, dont la demi-somme est le pas moyen Pm. Les évidements 14, de largeur C, sont limités par un rebord de largeur J et de hauteur M, et sont séparés par une distance F. Les évidements qui sont ici représentés avec des parois droites, peuvent être évasés ; dans ce cas le profil de l'agrafe est modifié en conséquence. Les agrafes en U 11 ont une épaisseur e et une largeur D et leurs pattes 17 ont une hauteur G et une largeur U. Le dos des agrafes 11 est enfoncé d'une faible valeur b par rapport au niveau du profil en I. On a de préférence :
(5) G et M > 0,5 mm et de préférence G et M > 1 mm, avec G<M,
(6) C> 1 mm et de préférence 2 mm, avec C < U + 10%Pm
(7) Pm < 10L/9
(8) Epaisseur e > 1mm et de préférence 2 mm,
(9) Retrait b de l'ordre de 1/10^{e} de mm,
(10) D + F < L
(11) I - 2J < 10%Pm

Pour fixer les idées, les dimensions caractéristiques du mode de réalisation préféré de la figure 3 sont les suivantes : H = 22 mm ; L = 28,6 mm ; H/L = 0,77 ; 1 = 12 mm ; pas maximum = 33 mm ; pas moyen = 30,8 mm ; e = G = 2 mm ; D = 13,3 mm ; profondeur des évidements 14 = 4,2 mm. A inertie égale, on montre que cette section en I permet un gain de poids de 25% par rapport à une section classique en teta. C'est ce qu'illustre la figure 17 sur laquelle on a comparé la relation inertie*module = fonction du poids par mètre de structure (pour une conduite de 12", soit environ 30cm), pour différents profils de fils de forme, à savoir des profils classiques en teta en acier et en aluminium, en U en acier, et en I en acier conforme à l'invention. On voit qu'en dehors du teta d'aluminium, nécessairement plus léger, le I d'acier conforme à l'invention diminue favorablement le rapport poids/inertie, par comparaison au fil en teta et même au fil en U.

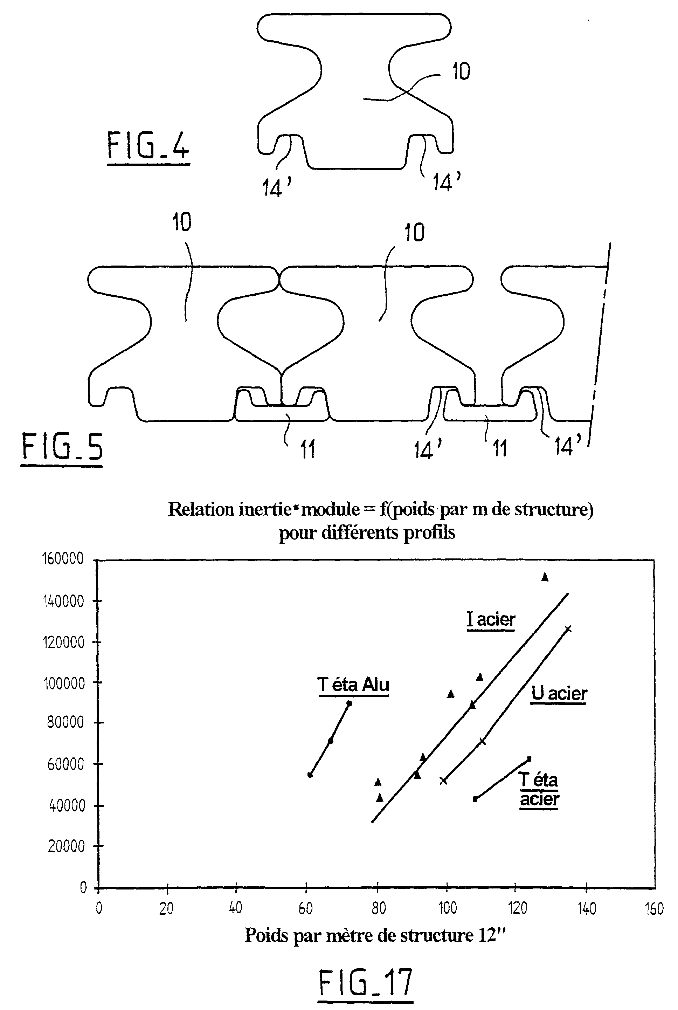

Bien que le profil "en cactus" de la figure 3 représente une forme préférée de réalisation de l'invention, de nombreuses autres formes sont possibles, dont quelques-unes sont illustrées sur les figures 4 à 16.

Sur les figures 4 et 5, le profil 10 en I comporte à sa base des évidements 14' destinés à l'agrafage par le bas au moyen d'une agrafe 11 en U semblable à celle décrite dans le mode de réalisation précédent. Ce mode d'agrafage par le bas est en principe réservé à une utilisation de la conduite en statique.

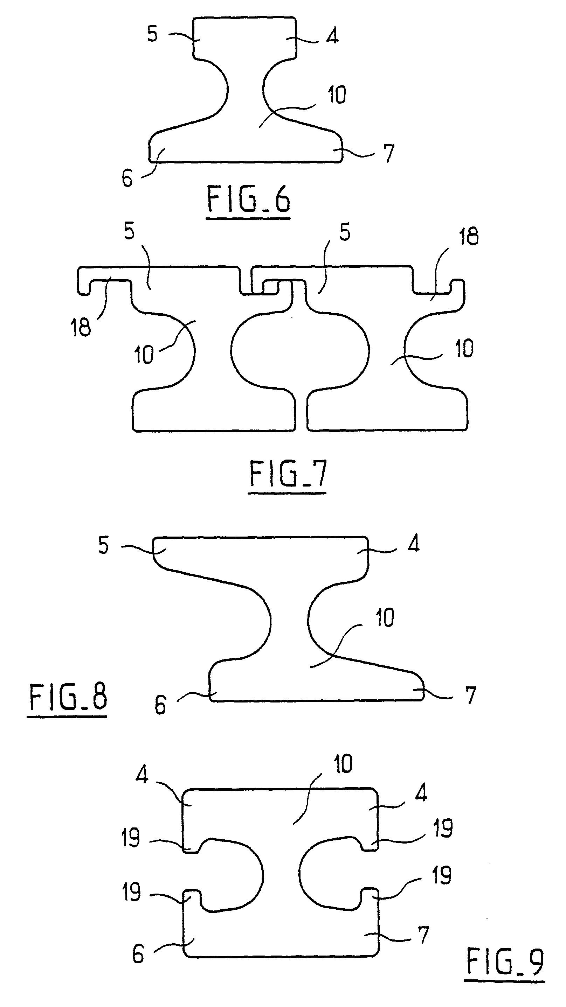

Les figures 6 à 9 illustrent des profils possibles pour le fil 10, les aménagements correspondant au mode d'agrafage retenu n'ayant pas été représentés sur certaines de ces figures.

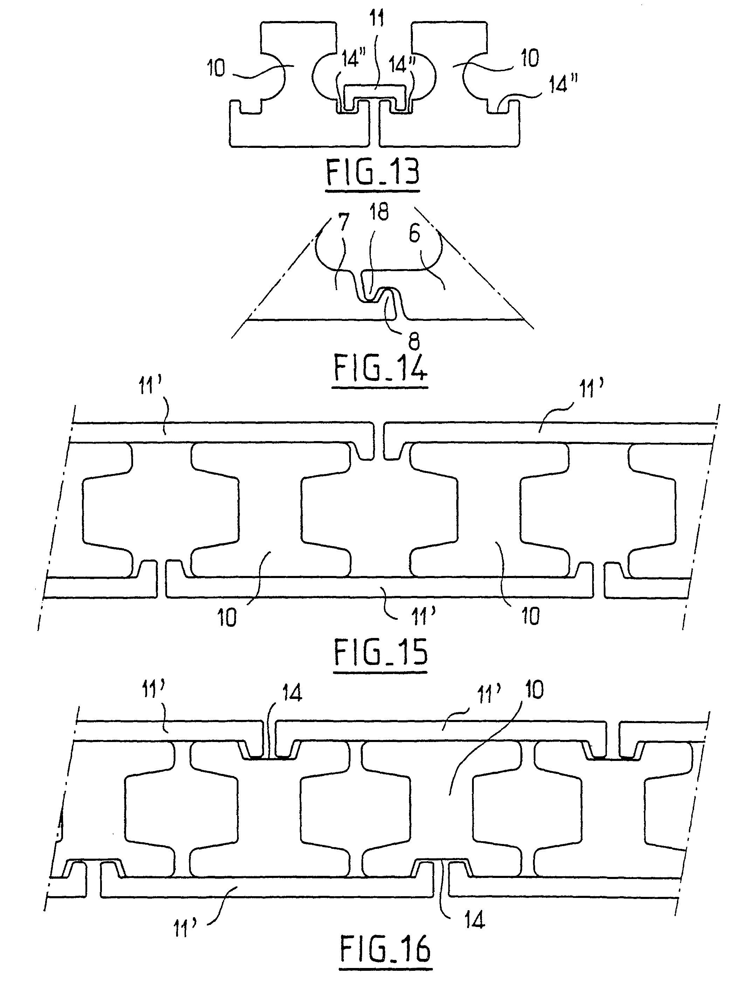

Sur la figure 6, la largeur des ailes supérieures 4 et 5 du profil symétrique 10 a été réduite. Ce profil est avantageusement agrafé de l'intérieur comme le montre la figure 13 par des agrafes en U 11 disposées dans des évidements 14" formés sur la partie supérieure des ailes inférieures 6, 7, et un élément tel qu'un joint peut être disposé au-dessus de l'agrafe 11.

La figure 7 montre un profil analogue à un I de base, dont les ailes supérieures 4, 5 ont été modifiées pour inclure des crochets d'auto-agrafage 18.

La figure 8 montre un profil 10 à ailes 4, 5 et 6, 7 dissymétriques permettant un auto-agrafage par le haut ou par le bas, cette dernière solution étant illustrée sur la figure 14 qui montrent des crochets d'auto-agrafage 18 formés de manière complémentaire sur les ailes 6, 7.

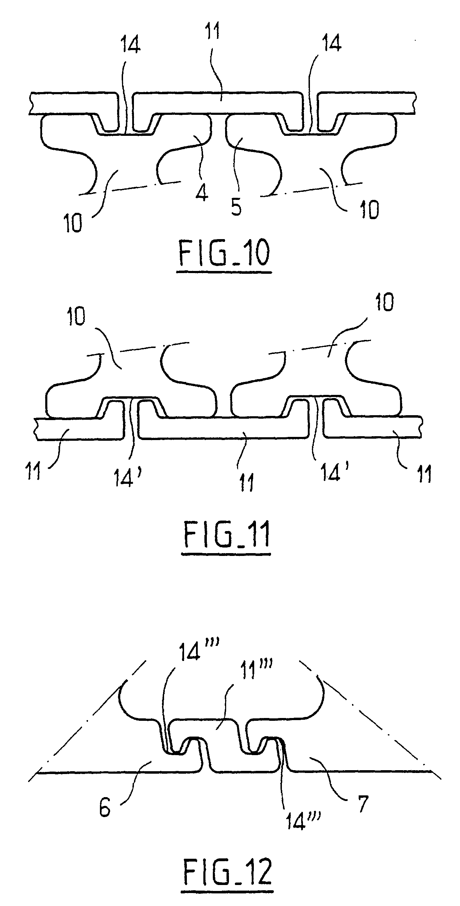

La figure 9 montre un profil 10 en I à très forte inertie grâce à l'épaiseur forte des ailes 4 à 7, lesquelles se terminent par un rebord 19. Le rebord 19 peut servir à l'agrafage, à moins qu'un mode d'agrafage tel que celui des figures 15 ou 16 (décrites ultérieurement) soit choisi.

On a décrit précédemment un agrafage par les ailes, soit du côté haut soit du côté bas, où les ailes des agrafes 11 en U sont logées dans des évidements 14 disposés entièrement dans les ailes du profil en I. Cela permet d'escamoter complètement l'agrafe 11 mais oblige à prévoir une épaisseur suffisante pour les ailes qui reçoivent les évidements 14.

On peut prévoir que les évidements 14 de réception des agrafes sont plus rapprochés du plan médian du profil 10, voire au point de former une seule gorge centrale recevant les ailes de deux agrafes 11 en U voisines, comme représenté sur les figures 10 (agrafage par le haut) ou 11 (agrafage par le bas). Dans ce cas, les agrafes 11 ne sont plus escamotées.

On a décrit jusqu'ici des agrafes en U, mais il va sans dire qu'on peut adopter d'autres profils d'agrafes, par exemple en zeta comme représenté sur la figure 12 qui montre une agrafe 11'" en zeta dont les bords sont logés dans des évidements 14"' prévus sur les faces respectivement inférieure et supérieure des ailes 6 et 7 (agrafage par le bas).

La figure 15 montre une variante d'agrafage par enjambement, ne nécessitant pas d'évidement pour loger les ailes des agrafes ; ici, les agrafes 11' en U large enjambent deux profils 10 en I, les agrafes supérieures étant décalées par rapport aux agrafes inférieures de manière que la combinaison des deux fils d'agrafe permet effectivement de maintenir entre leurs ailes les profils 10.

Dans la figure 16, les agrafes d'enjambement 11' sont semblables à celles de la figure précédente, si ce n'est qu'elles se logent dans des gorges centrales 14, alternativement en haut et en bas, des profils 10 analogues à celles des figures 10 et 11.

## Revendications

1. Conduite tubulaire flexible comprenant au moins, de l'intérieur vers l'extérieur, une gaine d'étanchéité interne (1), une voûte de pression cylindrique (2) constituée par l'enroulement en hélice à pas court d'un fil métallique de forme (10) agrafé, au moins une nappe (30) d'armures de traction enroulées à pas long et une gaine (33) de protection et d'étanchéité externe; **caractérisée en ce que** le fil de forme constituant la voûte est un fil à section en I ayant une âme centrale (3) d'épaisseur 1 et des ailes internes (6, 7) et externes (4, 5) de largeur égale ou différente L, avec 0,2 < 1/L < 0,6.

2. Conduite selon la revendication 1, **caractérisée en ce que** le rapport de la hauteur H à la largeur L du fil (10) est inférieur à 1, et de préférence à 0,8.

3. Conduite selon l'une quelconque des revendications 1 ou 2, **caractérisée en ce que** le rapport de la hauteur H à la largeur L du fil (10) est supérieur à 0,5 et de préférence à 0,7.

4. Conduite selon l'une quelconque des revendications 1 à 3, **caractérisée en ce que** le rapport des inerties Ixx/Iyy du fil (10) est inférieur à 1.

5. Conduite selon l'une quelconque des revendications 1 à 4, **caractérisée en ce que** le fil (10) est agrafé par le haut.

6. Conduite selon l'une quelconque des revendications précédentes, **caractérisée en ce que** les ailes supérieures et/ou inférieures (4, 5, 6, 7) du fil (10) présentent des évidements (14).

7. Conduite selon la revendication 6, **caractérisée en ce que** les évidements (14, 14', 18) sont formés du côté des ailes formant la face externe ou la face interne de la voûte (2).

8. Conduite selon la revendication 7, **caractérisée en ce que** les évidements (14, 14', 18) reçoivent au moins partiellement une agrafe (11).

9. Conduite selon la revendication 7, **caractérisée en ce que** les évidements (14, 14', 18) reçoivent au moins partiellement deux agrafes (11).

## Patentansprüche

1. Flexible Rohrleitung, die von innen nach außen mindestens aufweist: eine innere Dichtungshülle (1), eine zylindrische Druckschale (2), die durch einen wendelförmig ohne Zwischenräume gewickelten und verklammerten metallischen Profildraht (13) gebildet ist, mindestens eine Lage (30) von mit Zwischenräumen gewickelten Zugbewehrungen und eine äußere Schutz- und Dichtungshülle (33), **dadurch gekennzeichnet, dass** der die Schale bildende Profildraht ein Draht mit I-förmigen Querschnitt ist, der einen mittleren Steg (3) mit der Dicke 1 sowie innere Flügel (6, 7) und äußere Flügel (4, 5) mit gleicher oder unterschiedlicher Breite L aufweist, wobei 0,2 < l/L < 0,6 ist.

2. Leitung nach Anspruch 1, **dadurch gekennzeichnet, dass** das Verhältnis der Höhe H zur Breite L des Drahtes (10) kleiner als 1 und vorzugsweise kleiner als 0,8 ist.

3. Leitung nach einem der Ansprüche 1 oder 2,
**dadurch gekennzeichnet, dass** das Verhältnis der Höhe H zur Breite L des Drahtes (10) größer als 0,5 und vorzugsweise größer als 0,7 ist.

4. Leitung nach einem der Ansprüche 1 bis 3,
**dadurch gekennzeichnet, dass** das Verhältnis der Trägheitsmomente Ixx/Iyy des Drahtes (10) kleiner als 1 ist.

5. Leitung nach einem der Ansprüche 1 bis 4,
**dadurch gekennzeichnet, dass** der Draht (10) von oben verklammert ist.

6. Leitung nach einem der vorangehenden Ansprüche,
**dadurch gekennzeichnet, dass** die oberen und/oder unteren Flügel (4, 5, 6, 7) des Drahtes (10) Ausnehmungen (14) aufweisen.

7. Leitung nach Anspruch 6, **dadurch gekennzeichnet, dass** die Ausnehmungen (14, 14', 18) auf der Seite der Flügel gebildet sind, die die Außenfläche oder Innenfläche der Schale (2) bildet.

8. Leitung nach Anspruch 7, **dadurch gekennzeichnet, dass** die Ausnehmungen (14, 14', 18) mindestens teilweise eine Klammer (11) aufnehmen.

9. Leitung nach Anspruch 7, **dadurch gekennzeichnet, dass** die Ausnehmungen (14, 14', 18) mindestens teilweise zwei Klammern (11) aufnehmen.

## Claims

1. A flexible tubular pipe comprising at least, from the inside outward, an internal sealing sheath (1), a cylindrical pressure vault (2) consisting of the winding of an interlocked profiled metal wire (10) wound in a helix with a short pitch, at least one ply (30) of tensile armor layers wound with a long pitch, and an external protective sealing sheath (33), **characterized in that** the profiled wire constituting the vault is a wire with an I-shaped cross section having a central web (3) of thickness 1 and internal flanges (6, 7) and external flanges (4, 5) of equal or different width L, where 0.2 < 1/L < 0.6.

2. The pipe as claimed in claim 1, **characterized in that** the ratio of the height H to the width L of the wire (10) is less than 1 and preferably less than 0.8.

3. The pipe as claimed in either of claims 1 and 2, **characterized in that** the ratio of the pipe H to the width L of the wire (10) is greater than 0.5 and preferably 0.7.

4. The pipe as claimed in any one of claims 1 to 3, **characterized in that** the ratio of the moment of inertia Iₓₓ to the moment of inertia I_{yy} of the wire (10) is less than 1.

5. The pipe as claimed in any one of claims 1 to 4, **characterized in that** the wire (10) is interlocked from above.

6. The pipe as claimed in any one of the preceding claims, **characterized in that** the upper and/or lower flanges (4, 5, 6, 7) of the wire (10) have recesses (14).

7. The pipe as claimed in claim 6, **characterized in that** the recesses (14, 14', 18) are formed on that side of the flanges forming the external face or the internal face of the vault (2).

8. The pipe as claimed in claim 7, **characterized in that** the recesses (14, 14', 18) at least partially house a fastener (11).

9. The pipe as claimed in claim 7, **characterized in that** the recesses (14, 14', 18) at least partially house two fasteners (11).
